# EUROPÄISCHE PATENTANMELDUNG

(11) **EP 3 934 008 A1**
(43) Veröffentlichungstag der Anmeldung: **05.01.2022**
(21) Anmeldenummer: 21180078.4
(22) Anmeldetag: 17.06.2021
(51) Int. Cl.: H01M 10/613, H01M 10/615, H01M 10/625, H01M 10/647, H01M 10/6554, H01M 10/6556, H01M 10/6567, F28F 3/12, H01M 50/209

(54) **TEMPERIERVORRICHTUNG FÜR EINE BATTERIEZELLEN-ANORDNUNG, BATTERIEZELLEN-ANORDNUNG UND VERFAHREN ZUM TEMPERIEREN EINER SOLCHEN**

(30) Priorität: 03.07.2020 DE 102020117673
(71) Anmelder: Witzenmann GmbH, 75175 Pforzheim (DE)
(72) Erfinder: Ehrenberger, David, 75203 Königsbach-Stein (DE); Rösler, René, 76137 Karlsruhe (DE)
(74) Vertreter: Lemcke, Brommer & Partner Patentanwälte Partnerschaft mbB

(57) **Zusammenfassung**

Vorgeschlagen wird eine Temperiervorrichtung (2) für eine Batteriezellen-Anordnung (1) aus mehreren, vorzugsweise identischen und nebeneinander angeordneten Batteriezellen (3), aufweisend: ein erstes fluidleitendes Rahmenteil (2a) aus einem gut Wärme leitenden Material; ein zweites fluidleitendes Rahmenteil (2b) aus einem gut Wärme leitenden Material; ein drittes fluidleitendes Rahmenteil (2c) aus einem gut Wärme leitenden Material; ein Verbindungsteil (2d); bei der das erste Rahmenteil (2a), das zweite Rahmenteil (2b) und das dritte Rahmenteil (2c) zum Schaffen eines Strömungsraums fluidleitend miteinander verbunden sind und einen bevorzugt quaderförmigen Freiraum umgeben, in welchem Freiraum die Batteriezellen (3) anzuordnen sind und welcher Freiraum durch das Verbindungsteil (2d) zumindest teilweise nach außen abgeschlossen ist. Weiterhin vorgeschlagen werden eine Batteriezellen-Anordnung (1) mit mehreren, vorzugsweise identischen und nebeneinander angeordneten Batteriezellen (3) und mit einer Temperiervorrichtung (2) nach einem der vorstehenden Ansprüche, bei der die Batteriezellen (3) in dem Freiraum angeordnet und mittels der Rahmenteile (2a-2c) und des Verbindungsteils (2d) kraftschlüssig aneinander befestigt sind, sowie ein Verfahren zum Schaffen einer temperierten Batteriezellen-Anordnung (1), beinhaltend: Anordnen einer Anzahl von gleichartigen Batteriezellen (3) Seite an Seite nebeneinander; Umgeben der Batteriezellen (3) mit der vorgeschlagenen Temperiervorrichtung, sodass die Batteriezellen (3) durch die Rahmenteile (2a-2c) und das Verbindungsteil (2d) kraftschlüssig aneinander gehalten werden; und Durchströmen des Strömungsraums mit einem Temperierfluid.

## Beschreibung

Die Erfindung betrifft eine Temperiervorrichtung für eine Batteriezellen-Anordnung aus mehreren, vorzugsweise identischen und nebeneinander angeordneten Batteriezellen gemäß Anspruch 1.

Die Erfindung betrifft auch eine Batteriezellen-Anordnung mit mehreren, vorzugsweise identischen und nebeneinander angeordneten Batteriezellen und mit einer Temperiervorrichtung gemäß Anspruch 15.

Die Erfindung betrifft schließlich auch ein Verfahren zum Schaffen einer temperierten Batteriezellen-Anordnung gemäß Anspruch 18.

Aus der DE 10 2018 109 421 A1 sind eine Temperiervorrichtung und ein Verfahren zum Temperieren eines Elektromoduls bekannt, welche Temperiervorrichtung wenigstens ein Temperiermodul umfasst.

Das Temperiermodul 10 gemäß Fig. 26 der DE 10 2018 109 421 A1 umfasst einen rohrförmigen, gewellten Wandabschnitt, der mit dem Bezugszeichen 10a bezeichnet ist. Dieser weist in dem gewellten Bereich 10a eine Mehrzahl von Wellen auf und bildet eine Ummantelung 11 (Hülsenelement oder Temperierhülse), in die ein Temperierfluid eingeleitet wird.

Ein durch eine Zuleitung 13 in das Temperiermodul 10 eingeleitetes Temperierfluid verteilt sich im Inneren des Temperiermoduls 10, sodass ein dort aufgenommenes Elektromodul (z.B. eine Batteriezelle, nicht gezeigt) vollumfänglich mit dem Temperierfluid in Kontakt treten kann.

Wie Fig. 26 der DE 10 2018 109 421 A1 noch zu entnehmen ist, weisen die Zuleitungen 13 einen lichten Innendurchmesser DI auf, der im Wesentlichen einem Außendurchmesser DA im Bereich von zugehörigen Ableitungen 14 entspricht.

Darüber hinaus besitzen die Ableitungen 14 bei Bezugszeichen 14a eine umlaufende Vertiefung oder Nut, die zur Aufnahme eines (nicht gezeigten) Dichtelements, beispielsweise eines O-Rings, ausgebildet und vorgesehen ist. Die Zuleitungen 13 sind zu ihrem freien Ende 13a hin konisch erweitert, während die Ableitungen 14 zu ihrem freien Ende 14b hin konisch verjüngt sind. Auf diese Weise kann das Temperiermodul 10 gemäß Fig. 26 der DE 10 2018 109 421 A1 mit seinen Ableitungen 14 in die Zuleitungen 13 eines benachbarten, identischen Temperiermoduls 10 eingesteckt werden, um die genannten Temperiermodule fluidleitend zu verbinden. Zu diesem Zweck sind die Zuleitungen 13 und die Ableitungen 14 entlang einer gemeinsamen Achse FA fluchtend angeordnet.

In Fig. 31 der DE 10 2018 109 421 A1 ist eine Elektromodul-Anordnung aus insgesamt sieben Elektromodulen 20 gezeigt, wobei jedes Elektromodul 20 von einem Temperiermodul 10 gemäß Fig. 26 umgeben ist. Die Elektromodule 20 sind als Batteriemodule oder Batteriezellen (sogenannte Prismazellen) ausgebildet.

Wesentlich in der Darstellung gemäß Fig. 31 ist nun, dass die einzelnen Temperiermodule 10 fluidleitend miteinander verbunden sind, indem jeweils die Ableitungen 14 eines Temperiermoduls 10 direkt in die Zuleitungen 13 eines benachbarten Temperiermoduls 10 eingesteckt sind, wie weiter oben bereits beschrieben. Gemäß der Pfeile FL in das erste Temperiermodul 10 eingeleitetes Temperierfluid gelangt somit nach und nach in alle Temperiermodule 10, bis es aus den Ableitungen 14 des in Strömungsrichtung hintersten Temperiermoduls wieder austritt. Es ist auch möglich, das in Strömungsrichtung letzte Temperiermodul 10 abweichend auszubilden, so dass dieses Temperiermodul entweder gar keine Ableitungen oder geeignet verschlossene Ableitungen aufweist. Es ist dann in Abwandlung der Ausgestaltung gemäß Fig. 31 auch möglich, das Temperierfluid nur bei einer der Zuleitungen 13 des ersten Temperiermoduls 10 gemäß 31 einzuleiten. Wenn nun das in Strömungsrichtung letzte Temperiermodul 10 keine Ableitungen aufweist, wie beschrieben, wird das Temperierfluid nach Durchströmen der genannten Temperiervorrichtung bei der anderen Zuleitung 13 des ersten Temperiermoduls 10 wieder austreten, nachdem es alle Temperiermodule 10 durchströmt und somit für eine effektive Kühlung der Elektromodule 20 gesorgt hat. Dies ist in Fig. 31 durch den mit Bezugszeichen FL' bezeichneten Pfeil symbolisiert.

Durch das direkte und einfache Verbinden benachbarter Temperiermodule ist die Lehre der genannten Druckschrift sehr einfach und kostengünstig umsetzbar. Dabei ist allerdings eine zusätzliche Verspannung der einzelnen Temperiermodule gegeneinander mittels einer eigens dafür vorgesehenen Verspanneinrichtung (in DE 10 2018 109 421 A1 nicht gezeigt) vorzusehen, was bei vergrößertem Bauraum zusätzliche Kosten und Gewicht sowie eine niedrigere Energiedichte (also ein ungünstigeres Leistungsgewicht) bedeuten kann und was gerade im Fahrzeugbau zu vermeiden ist.

Der Erfindung liegt die Aufgabe zugrunde, hier Abhilfe zu schaffen und eine Temperiervorrichtung, eine Batteriezellen-Anordnung und ein Verfahren der jeweils eingangs genannten Art anzugeben, die bzw. das bei unverändertem Bauraum ohne zusätzliche Kosten und Gewicht sowie einer gleichbleibend hohen Energiedichte (also einem günstigeren Leistungsgewicht) auskommt.

Die Aufgabe wird erfindungsgemäß gelöst durch eine Temperiervorrichtung mit den Merkmalen des Anspruchs 1, durch eine Batteriezellen-Anordnung mit den Merkmalen des Anspruchs 15 und durch ein Verfahren zum Schaffen einer temperierten Batteriezellen-Anordnung mit den Merkmalen des Anspruchs 18.

Vorteilhafte Weiterbildungen sind in den Unteransprüchen definiert.

Eine erfindungsgemäße Temperiervorrichtung für eine Batteriezellen-Anordnung aus mehreren, vorzugsweise identischen und nebeneinander angeordneten Batteriezellen, weist auf: ein erstes fluidleitendes Rahmenteil aus einem gut Wärme leitenden Material; ein zweites fluidleitendes Rahmenteil aus einem gut Wärme leitenden Material; ein drittes fluidleitendes Rahmenteil aus einem gut Wärme leitenden Material; und ein Verbindungsteil. Das erste Rahmenteil, das zweite Rahmenteil und das dritte Rahmenteil sind zum Schaffen eines Strömungsraums fluidleitend miteinander verbunden und umgeben einen bevorzugt quaderförmigen Freiraum, in welchem Freiraum die Batteriezellen anzuordnen sind und welcher Freiraum durch das Verbindungsteil zumindest teilweise nach außen abgeschlossen ist, um die Batteriezellen gegeneinander zu verspannen.

Vorzugsweise bildet das erste Rahmenteil eine erste Seite eines (gedachten) Quaders bzw. des quaderförmigen Freiraums, das zweite Rahmenteil bildet eine zweite Seite des (gedachten) Quaders, und das dritte Rahmenteil bildet eine dritte Seite des (gedachten) Quaders, während das Verbindungsteil die vierte Seite des (gedachten) Quaders bildet, sodass die Rahmenteile und das Verbindungsteil sich entlang eines Quaderumfangs erstrecken. Dabei können - ohne Beschränkung - das erste und dritte Rahmenteil gleich lang und länger als das zweite Rahmenteil bzw. das Verbindungsteil ausgebildet sein, wobei letztere beiden wiederum gleich lang sind. Ober- und Unterseite des (gedachten) Quaders können frei bleiben; eine Ausnahme wird weiter unten beschrieben.

Eine erfindungsgemäße Batteriezellen-Anordnung mit mehreren, vorzugsweise identischen und nebeneinander angeordneten Batteriezellen und mit einer Temperiervorrichtung gemäß der vorliegenden Erfindung zeichnet sich entsprechend dadurch aus, dass die Batteriezellen in dem Freiraum angeordnet und mittels der Rahmenteile und des Verbindungsteils kraftschlüssig aneinander befestigt sind.

Im Zuge eines erfindungsgemäßen Verfahrens zum Schaffen einer temperierten Batteriezellen-Anordnung sind folgende Schritte vorgesehen:
- Anordnen einer Anzahl von gleichartigen Batteriezellen Seite an Seite nebeneinander;
- Umgeben der Batteriezellen mit einer erfindungsgemäßen Temperiervorrichtung, sodass die Batteriezellen durch die Rahmenteile und das Verbindungsteil kraftschlüssig aneinander gehalten werden; und
- Durchströmen des Strömungsraums mit einem Temperierfluid.

Somit kommen die Temperiervorrichtung und die Batteriezellen-Anordnung ohne zusätzliche Bauteile zur Verspannung der Batteriezellen gegeneinander aus, weil diese Funktion durch die ohnehin vorhandenen Rahmenteile, die für den Transport des Temperierfluids vorgesehen sind und einen hierfür vorgesehenen Strömungsraum bilden, mit übernommen wird. Diese Funktionsintegration wirkt sich positiv auf den benötigten Bauraum und das Leistungsgewicht (die Energiedichte) aus. Die Rahmenteile (und das Verbindungsteil, welches ebenfalls bevorzugt gut Wärme leitend ausgebildet ist) halten die Batteriezellen zusammen, wobei sie diese physisch kontaktieren und so für eine Temperierung (mittels des Temperierfluids) sorgen.

Als gut Wärme leitende Materialien kommen insbesondere Metalle in Betracht, bevorzugt Kupfer, Aluminium oder entsprechende Legierungen und Stahl.

Eine erste Weiterbildung der erfindungsgemäßen Temperiervorrichtung sieht vor, dass das erste bis dritte Rahmenteil als ein durchgängiges, vorzugsweise einstückiges bzw. integrales Rahmenteil ausgebildet sind. Auf diese Weise ist die Bauteilanzahl maximal reduziert und die Handhabung bzw. der Fertigungsaufwand maximal vereinfacht.

Eine andere Weiterbildung der erfindungsgemäßen Temperiervorrichtung sieht vor, dass das durchgängige Rahmenteil eine etwa C-förmige oder U-förmige Konfiguration aufweist. In einen solchen Rahmen lassen sich die Batteriezellen einfach und bequem von der offenen Seite her einfügen.

Eine wieder andere Weiterbildung der erfindungsgemäßen Temperiervorrichtung sieht vor, dass das erste bis dritte Rahmenteil als separate Rahmenteile ausgebildet sind, wobei das zweite Rahmenteil an das erste Rahmenteil und an das dritte Rahmenteil angesetzt ist, um das erste Rahmenteil und das dritte Rahmenteil fluidleitend zu verbinden. Dies schafft größere Freiheiten bei der Fertigung, weil der Zusammenbau der Batteriezellen-Anordnung von zwei Seiten her erfolgen kann. Außerdem ist die Größe der einzelnen Bauteile reduziert.

Das erste und das dritte Rahmenteil können auch segmentartig aus jeweils mehreren Einzelteilen aufgebaut werden, die fluidleitend zusammengefügt werden, vorzugsweise stoffschlüssig.

Die Rahmenteile sind vorteilhafter Weise um die Batteriezellen herum mit einer mechanischen Vorspannung montiert. Die Vorspannung kann vorzugsweise durch eine stoffschlüssige Verbindung, höchst vorzugsweise durch eine Schweißverbindung in optionaler Kombination mit einem Verkleben zur vollständigen Abdichtung ausgeführt sein, um unverzüglich die Last der Verspannung aufnehmen zu können. Zusätzlich oder alternativ sind auch formschlüssige (z.B. Durchsetzfügen, Bördeln, Auftulpen) und/oder kraftschlüssige (z.B. Verkeilen, Schrauben) Verbindungen möglich.

Die Abdichtung gegeneinander kann, wie oben beschrieben, durch eine kombinierte Klebedichtnaht erfolgen, jedoch ist die Erfindung nicht dahingehend beschränkt, sodass auch eine Abdichtung mittels Elastomer/Gummi durch beispielsweise einen O-Ring mit entsprechend angeformtem Sitz möglich ist.

Eine bevorzugte Weiterbildung der erfindungsgemäßen Temperiervorrichtung sieht vor, dass zumindest das erste Rahmenteil und das dritte Rahmenteil und ggf. auch das zweite Rahmenteil als Rohrleitungsabschnitte mit rechteckigem oder ovalem Querschnitt (vorzugsweise nach Art eines Stadionovals mit gerade Seiten und angesetzten Halbkreisen) ausgebildet sind. Solche Rohrleitungsabschnitte weisen also flache Seitenwände auf, mit denen sie gut flächig-wärmeleitend an zu temperierende Batteriezellen anlegbar sind.

Eine noch andere Weiterbildung der erfindungsgemäßen Temperiervorrichtung sieht vor, dass der genannte Querschnitt in einer ersten Raumrichtung eine geringere, lichte Abmessung aufweist als in einer zweiten Raumrichtung senkrecht zu der ersten Raumrichtung, welche erste Raumrichtung vorzugsweise den quaderförmigen Freiraum durchsetzt, vorzugsweise senkrecht zu einer gedachten Seitenfläche des quaderförmigen Freiraums, während die zweite Raumrichtung vorzugsweise parallel zu der gedachten Seitenfläche des quaderförmigen Freiraums orientiert ist. Auf diese Weise sind die Rahmenteile mit ihrer relativ breiten Seitenfläche (entsprechend der zweiten Raumrichtung) an zu temperierende Batteriezellen anlegbar, um diese möglichst großflächig zu kontaktieren.

Eine äußerst bevorzugte Weiterbildung der erfindungsgemäßen Temperiervorrichtung sieht vor, dass das Verbindungsteil als fluidleitendes Verbindungsteil ausgebildet ist und mit den ersten bis dritten Rahmenteilen in fluidleitender Verbindung steht. Auf diese Weise kann auch das Verbindungsteil Bestandteil des Strömungsraums sein und zur Temperierwirkung beitragen, insbesondere zur Temperierung zusätzlicher Komponenten, wie Elektronikkomponenten etc.

Eine noch weitere Weiterbildung der erfindungsgemäßen Temperiervorrichtung sieht vor, dass das Verbindungsteil und, bei entsprechendem Rückbezug, vorzugsweise auch das zweite Rahmenteil eine Zuleitung und/oder eine Ableitung für ein Temperierfluid aufweist. Auf diese Weise ist das Temperierfluid in die Rahmenteile einleitbar und - nach erfolgter Temperierung - wieder aus diesen ausleitbar, um insbesondere aufgenommene Wärme abzuführen.

Eine andere Weiterbildung der erfindungsgemäßen Temperiervorrichtung umfasst ein Temperierfluid, vorzugsweise Wasser oder ein Dielektrikum. Dies hat sich in der Praxis als vorteilhaft erwiesen, um eine gute Temperierwirkung zu erhalten. Die Verwendung eines Dielektrikums kann als Schutz vor elektrischen Kurzschlüssen ratsam sein.

Eine wieder andere Weiterbildung der erfindungsgemäßen Temperiervorrichtung sieht vor, dass in dem Freiraum eine Anzahl von Hülsenelementen zur gekapselten Aufnahme von jeweils einer Batteriezelle angeordnet bzw. vorgesehen sind. Diese Hülsen(-Elemente) oder Temperierhülsen sind insbesondere aus der eingangs erwähnten DE 10 2018 109 421 A1 hinreichend bekannt, worauf hier Bezug genommen wird. Die Temperierhülsen können ihrerseits mit einem Temperierfluid gefüllt oder davon durchströmt sein, um eine gezielte Temperierung der Batteriezellen zu erreichen.

Eine besonders vorteilhafte Weiterbildung der erfindungsgemäßen Temperiervorrichtung sieht vor, dass jedes der Hülsenelemente über wenigstens einen Durchbruch in seiner Mantelfläche fluidleitend mit einem der Rahmenteile verbunden ist, welche Rahmenteile entsprechende Durchbrüche aufweisen, vorzugsweise an ihrer dem Freiraum zugewandten Innenseite. Damit ist es möglich, die Batteriezellen bzw. deren Temperierhülsen direkt an einen Kreislauf des Temperierfluids in den Rahmenteilen anzuschließen, um eine besonders effektive Temperierung zu erreichen. Die Rahmenteile fungieren dabei als eine Art "Verteilerrohr" für das Temperierfluid. Die Rahmenteile sind mit den Temperierhülsen vorzugsweise stoffschlüssig, höchst vorzugsweise mit einer Klebeverbindung zum Ausgleich von Montagetoleranzen und Dehnungen aufgrund unterschiedlicher Temperaturen und Ausdehnungskoeffizienten verbunden. Die Abdichtung der beiden Fügepartner ist in einer weiteren Ausgestaltungsvariante auch mit einem Dichtelement, vorzugsweise einer Elastomerdichtung, möglich, welches Dichtelement beispielsweise als Flachdichtung oder O-Ring ausgeführt sein kann.

Eine entsprechend vorteilhafte Weiterbildung der erfindungsgemäßen Batteriezellen-Anordnung sieht nun vor, dass die einzelnen Batteriezellen jeweils in einem Hülsenelement zur gekapselten Aufnahme von jeweils einer Batteriezelle angeordnet sind und dass jedes der Hülsenelemente über wenigstens einen Durchbruch in seiner Mantelfläche fluidleitend mit einem der Rahmenteile verbunden ist, welche Rahmenteile entsprechende Durchbrüche aufweisen, vorzugsweise an ihrer dem Freiraum zugewandten Innenseite.

Eine andere Weiterbildung der erfindungsgemäßen Temperiervorrichtung sieht vor, dass die Rahmenteile und/oder das Verbindungsteil an einer dem Freiraum zugewandten Innenseite für einen direkten Wärme leitenden Kontakt mit in dem Freiraum anzuordnenden Batteriezellen ausgebildet sind, vorzugsweise unter Zwischenschaltung eines Wärmeleitmittels (z.B. Wärmeleitpaste). Eine solche Ausgestaltung kann vollständig ohne Temperierhülsen für die Batteriezellen auskommen, welche allein durch Wärme leitenden Kontakt mit den fluiddurchströmten Rahmenteilen temperiert werden. Hierdurch kann der Fertigungsaufwand stark reduziert werden.

Eine vorteilhafte Weiterbildung der erfindungsgemäßen Batteriezellen-Anordnung sieht dementsprechend vor, dass die Batteriezellen die Rahmenteile und/oder das Verbindungsteil direkt Wärme leitend kontaktieren, vorzugsweise unter Zwischenschaltung eines Wärmeleitmittels, z.B. einer Wärmeleitpaste.

Eine noch andere Weiterbildung der erfindungsgemäßen Temperiervorrichtung umfasst ein zusätzliches Rahmenteil, welches zusätzliche Rahmenteil den Freiraum auf einer anderen Seite, vorzugsweise einer Unterseite, umgibt als die ersten bis dritten Rahmenteile und das Verbindungsteil, Auf diese Weise kann eine zusätzliche Temperierung (Bodenkühlung) erreicht werden. Dies ist gegenüber einer oberseitigen Temperierung vorteilhaft, weil an der Oberseite der Batteriezellen oftmals die Zellableiter (elektrische Anschlüsse) sowie Befüll- und/oder Entgasungsöffnungen angeordnet sind, sodass eine Zugänglichkeit von außen erforderlich sein kann.

Eine besonders vorteilhafte Weiterbildung der erfindungsgemäßen Temperiervorrichtung sieht noch vor, dass an einem der Rahmenteile und/oder an dem Verbindungsteil, vorzugsweise nur an dem Verbindungsteil, eine Aufnahme für eine Elektronikplatine in Wärme leitender Verbindung mit dem Strömungsraum angeordnet ist. Auf diese Weise kann die vorhandene Temperierwirkung auch zum Temperieren zusätzlicher Elektronikbauteile genutzt werden, beispielsweise für ein Batterie-Managementsystem oder dgl.

Weitere Eigenschaften und Vorteile der Erfindung ergeben sich aus der folgenden Beschreibung diverser Ausführungsbeispiele anhand der Zeichnung.
- Figur 1: zeigt eine erste erfindungsgemäße Batteriezellen-Anordnung in isometrischer Darstellung;
- Figur 2: zeigt einen Querschnitt durch die Batteriezellen-Anordnung gemäß Figur 1;
- Figur 3: zeigt eine Draufsicht auf die Batteriezellen-Anordnung gemäß Figur 1;
- Figur 4: zeigt einen Längsschnitt durch die Batteriezellen-Anordnung gemäß Figur 1;
- Figur 5: zeigt eine isometrische Darstellung einer anderen erfindungsgemäßen Batteriezellen-Anordnung;
- Figur 6: zeigt eine Draufsicht auf die Batteriezellen-Anordnung gemäß Figur 5;
- Figur 7: zeigt einen Längsschnitt durch die Batteriezellen-Anordnung gemäß Figur 5;
- Figur 8: zeigt eine isometrische Darstellung einer weiteren erfindungsgemäßen Batteriezellen-Anordnung;
- Figur 9: zeigt einen Querschnitt durch die Batteriezellen-Anordnung gemäß Figur 8;
- Figur 10: zeigt ein Detail eines Längsschnitts durch die Batteriezellen-Anordnung gemäß Figur 8; und
- Figur 11: zeigt eine isometrische Darstellung noch einer weiteren erfindungsgemäßen Batteriezellen-Anordnung ähnlich der Figur 8.

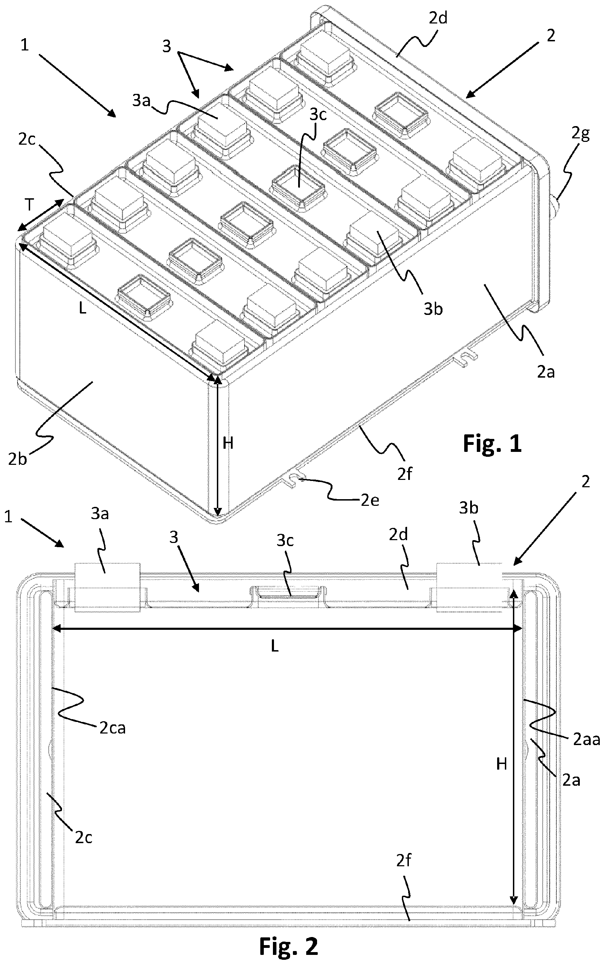

In Figur 1 ist eine erfindungsgemäße Batteriezellen-Anordnung in isometrischer Gesamtdarstellung gezeigt. Die Batteriezellen-Anordnung ist insgesamt mit dem Bezugszeichen 1 bezeichnet und umfasst eine erfindungsgemäße Temperiervorrichtung, die mit dem Bezugszeichen 2 bezeichnet ist. Die Temperiervorrichtung 2 für die Batteriezellen-Anordnung 1, welche Batteriezellen-Anordnung aus mehreren identischen und nebeneinander angeordneten Batteriezellen 3 gebildet ist, weist folgende Bestandteile auf:

Ein erstes fluidleitendes Rahmenteil 2a aus einem gut wärmeleitenden Material, insbesondere Metall, beispielsweise Aluminium oder eine Aluminiumlegierung; ein zweites fluidleitendes Rahmenteil 2b, ebenfalls aus einem gut wärmeleitenden Material; ein drittes fluidleitendes Rahmenteil 2c aus einem ebenfalls gut wärmeleitenden Material; und ein Deckel- oder Verbindungsteil 2d. Das erste Rahmenteil 2a, das zweite Rahmenteil 2b und das dritte Rahmenteil 2c sind einstückig-integral ausgebildet und ergeben ein etwa C- oder U-förmiges Rahmenelement, welches in seinem Inneren einen durchgängigen Strömungsraum ausbildet. Insbesondere an dem ersten Rahmenteil 2a und dem dritten Rahmenteil 2c können in einem unteren Bereich Befestigungsstrukturen 2e zum Befestigen der Batteriezellen-Anordnung an einem weiteren Bauteil vorgesehen sein, worauf hier nicht weiter einzugehen ist. Wie in Figur 1 noch zu erkennen ist, können die Befestigungsstrukturen 2e auch an einer zusätzlichen Bodenplatte 2f für die Batteriezellen-Anordnung 2 angeordnet sein.

Die miteinander verbundenen ersten bis dritten Rahmenteile 2a - 2c sowie das Verbindungsteil 2d umschließen einen quaderförmigen Freiraum, in dem die Batteriezellen 3 nebeneinander angeordnet sind, wie dargestellt. Durch das Aufsetzen des Verbindungsteils 2d auf den ansonsten C- bzw. U-förmigen Rahmen bzw. das Rahmenelement, den/das die ersten bis dritten Rahmenteile 2a - 2c bilden, lassen sich die Batteriezellen 3 gegeneinander verspannen, um so die gezeigte Batteriezellen-Anordnung 1 zu bilden und die Batteriezellen 3 zusammenzuhalten. Zu diesem Zweck kann das Verbindungsteil 2d stoffschlüssig oder lösbar-kraftschlüssig mit dem ersten Rahmenteil 2a und dem dritten Rahmenteil 2c verbunden sein, was in der Darstellung gemäß Figur 1 nicht zu erkennen ist.

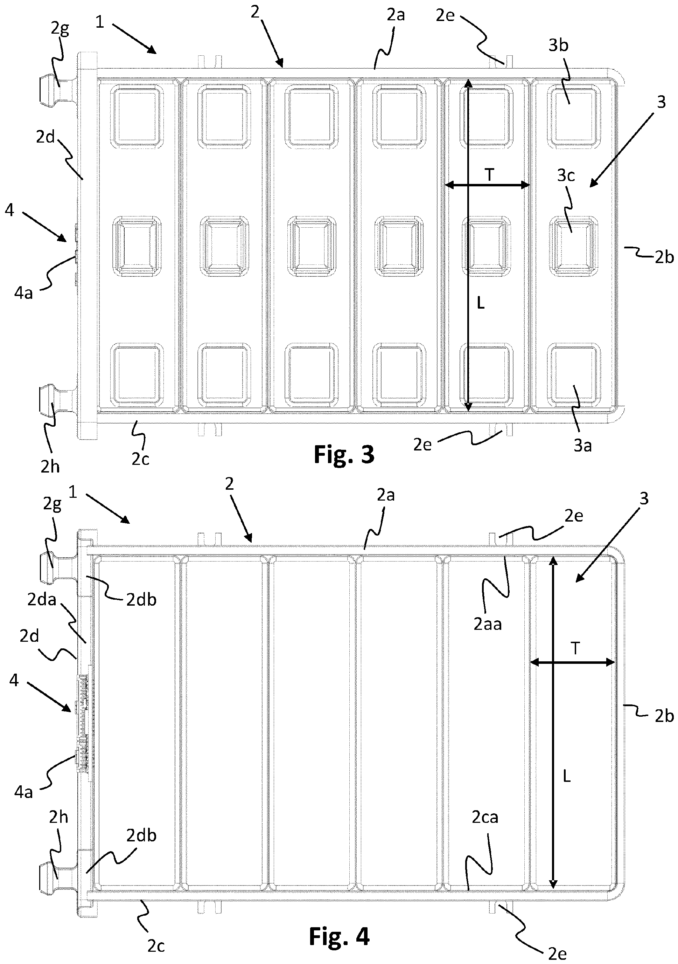

An dem Verbindungs- oder Deckelteil 2d sind Anschlüsse (Zuleitung bzw. Ausleitung) zum Ein- und Ausleiten eines Temperierfluids in die fluidleitenden Rahmenteile 2a - 2c angeordnet, von denen in Figur 1 nur einer bei Bezugszeichen 2g ansatzweise zu erkennen ist. Hierauf wird weiter unten insbesondere anhand der Figuren 3 und 4 noch genauer eingegangen.

Die Batteriezellen 3, von denen in Figur 1 aus Gründen der Übersichtlichkeit nicht alle explizit bezeichnet sind, weisen jeweils an ihrer Oberseite zwei sogenannte Zellableiter (elektrische Anschlüsse) 3a bzw. 3b auf. Weiter ist bei Bezugszeichen 3c eine Befüllöffnung oder dergleichen vorgesehen. Die Batteriezellen 3 sind als sogenannte prismatische Zellen oder Prismazellen ausgebildet und besitzen ebenfalls eine angenäherte Quaderform. Die Abmessungen der Batteriezellen 3 sind so gewählt bzw. so auf die Rahmenteile 2a - 2c und das Verbindungsteil 2d abgestimmt, dass die Batteriezellen 3 in Richtung ihrer längeren Seite, wie dargestellt, gerade zwischen die Rahmenteile 2a und 2c passen. Des Weiteren ist eine Länge der Rahmenteile 2a und 2c so bemessen, dass sie im Wesentlichen gerade einem ganzzahligen Vielfachen einer Tiefe T der Batteriezellen 3 entspricht. Gleiches gilt insbesondere für das zweite Rahmenteil 2b bezogen auf eine Länge L der Batteriezellen 2. Eine Breite insbesondere der ersten bis dritten Rahmenteile 2a - 2c entspricht im Wesentlichen einer Höhe H der Batteriezellen 3, wie dargestellt.

Figur 2 zeigt einen Querschnitt durch die Batteriezellen-Anordnung 1 gemäß Figur 1, wobei hier und im Folgenden gleiche Bezugszeichen gleiche oder zumindest gleichwirkende Elemente bezeichnen.

Wie sich der Darstellung in Figur 2 insbesondere entnehmen lässt, weisen die Rahmenteile 2a und 2c (und entsprechend auch das Rahmenteil 2b, das jedoch in Figur 2 nicht zu erkennen ist) einen flachen, ovalen Querschnitt nach Art eines Stadionovals mit geraden Seitenlinien und angesetzten Halbkreisen auf. Sie liegen jeweils mit ihrer inneren Seitenfläche 2aa bzw. 2ca großflächig an den Batteriezellen 3 über im Wesentlichen deren komplette Höhe H an, was die Temperierwirkung begünstigt. Zwischen den genannten Rahmenteilen 2a - 2c und den Batteriezellen 3 kann in diesem Bereich ein geeignetes Wärmeleitmittel angeordnet sein, beispielsweise eine Wärmeleitpaste (nicht gezeigt).

Wie sich der Figur 2 noch entnehmen lässt, steht das Deckelteil bzw. Verbindungsteil 2d in allen Richtungen mehr oder weniger deutlich gegenüber den Rahmenteilen 2a - 2c über.

In der Draufsicht gemäß Figur 3 ist neben der angesprochenen einen Zu- oder Ableitung 2g auch die andere Zu- bzw. Ableitung 2h erkennbar, ebenso die Befestigungsstrukturen 2e auf der anderen Seite der Batteriezellen-Anordnung 1. Die Zu- bzw. Ableitungen 2g, 2h stehen in fluidleitender Verbindung mit dem Strömungsraum zumindest im Inneren der ersten bis dritten Rahmenteile 2a - 2c, vgl. auch Figur 4.

Bei Bezugszeichen 4 ist eine Elektronikplatine mit entsprechenden Elektronikbauteilen 4a erkennbar, die in eine (in Figur 3 nicht weiter erkennbare) Ausnehmung in dem Verbindungsteil 2d wärmeleitend integriert ist. Vorzugsweise weist auch das Verbindungsteil 2d einen mit der Zuleitung bzw. der Ableitung 2g, 2h in Fluidverbindung stehenden Strömungsraum auf, um insbesondere die Elektronikplatine 4 temperieren zu können. Es kann jedoch auch bereits ausreichend sein, wenn das Verbindungsteil 2d aus einem gut wärmeleitenden Material hergestellt ist, um die angestrebte Temperierwirkung insbesondere für die Elektronikplatine 4 zu erzielen. Die Zuleitung und die Ableitung 2g, 2h dienen zum Anschluss der Temperiervorrichtung 2 an einen (externen) Fluidkreislauf, was hier nicht weiter dargestellt ist.

In der Längsschnitt-Ansicht gemäß Figur 4 ist die Anordnung der Elektronikplatine 4 in der genannten Ausnehmung 2da des Verbindungsteils 2d besser erkennbar. Außerdem lässt sich der fluidleitende Anschluss des ersten Rahmenteils 2a und des dritten Rahmenteils 2c an das Verbindungsteil 2d bzw. die Zuleitung und Ausleitung 2g, 2h gut erkennen: In Wirkverbindung mit der Zuleitung bzw. der Ausleitung 2g, 2h weist das Verbindungsteil 2d jeweils einen verbreiterten Strömungsraum 2db auf, in den das erste Rahmenteil 2a bzw. das zweite Rahmenteil 2c (abgedichtet) hineinragt, um die wiederholt angesprochene fluidleitende Verbindung zu realisieren.

Die in den Figuren 1 und 2 dargestellte Bodenplatte 2f kann in die Temperierung mit einbezogen werden, insbesondere wenn sie aus einem ebenfalls gut wärmeleitenden Material hergestellt und entsprechend insbesondere mit dem Verbindungsteil 2d und/oder den ersten bis dritten Rahmenteilen 2a bis 2c verbunden ist. Auf diese Weise lässt sich eine Bodenkühlung für die Batteriezellen-Anordnung 1 realisieren, während die Oberseite mit den Ableitern 3a, 3b und den Befüllöffnungen oder Entgasungsöffnungen 3c frei zugänglich bleibt, wie dargestellt. In Abwandlung der gezeigten Figuren ist es auch möglich, die Bodenplatte 2f selbst fluidleitend auszugestalten und entsprechend insbesondere mit Zuleitung und Ableitung 2g, 2h fluidleitend zu verbinden.

Im Rahmen der vorliegenden Beschreibung ist es nicht erforderlich, zwischen Zuleitung und Ableitung 2g, 2h zu unterscheiden: Wenn der eine Anschluss als Zuleitung 2g fungiert, fungiert entsprechend der andere Anschluss 2h als Ableitung und umgekehrt.

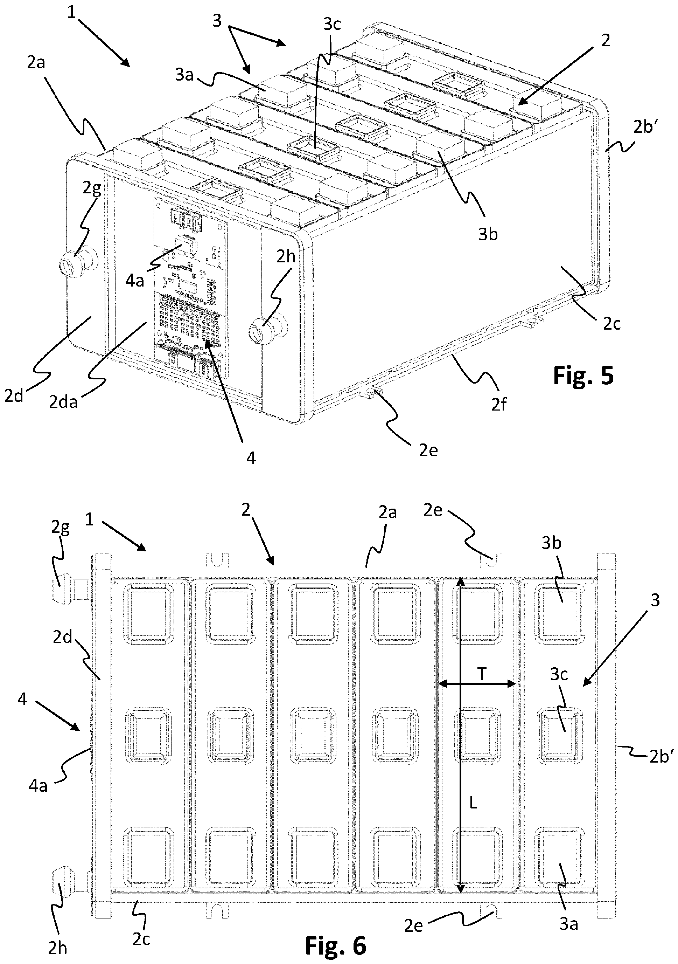

Die Figuren 5 bis 7 zeigen eine andere Ausgestaltung der erfindungsgemäßen Batteriezellen-Anordnung 1, wobei hier nur auf die wesentlichen Unterschiede zu der Ausgestaltung gemäß den Figuren 1 bis 4 näher eingegangen werden soll.

Gemäß der isometrischen Darstellung in der Figur 5 ist die Batteriezellen-Anordnung 1 mit Blick auf diejenige Stirnseite (Verbindungsteil 2d) gezeigt, welche die Elektronikplatine 4 und die Zuleitung bzw. Ableitung 2g, 2h aufweist. Ansonsten besteht der wesentliche Unterschied zu der zuvor beschriebenen Ausgestaltung darin, dass das zweite Rahmenteil (vgl. Bezugszeichen 2b in den Figuren 1 bis 4) nun ebenfalls als Verbindungsteil bzw. Deckelteil analog zu Element 2d ausgebildet und dementsprechend mit dem geänderten Bezugszeichen 2b' bezeichnet ist. Die Batteriezellen 3 sind entsprechend sandwichartig zwischen den Verbindungsteilen 2b' und 2d angeordnet, welche Verbindungsteile 2d, 2b' ihrerseits über die Rahmenteile 2a, 2c fluidleitend miteinander verbunden sind, wobei die Rahmenteile 2a, 2c zugleich als Zuganker dienen, um die Batteriezellen 3 in der gezeigten Art und Weise zusammenzuhalten.

Der wärmeleitende Kontakt insbesondere zwischen den Rahmenteilen 2a sowie 2c einerseits und den Batteriezellen 3 kann genauso ausgebildet sein, wie weiter oben anhand der Figuren 1 bis 4 detailliert beschrieben.

In Figur 6 ist eine Draufsicht auf eine Batteriezellen-Anordnung 1 gemäß Figur 5 gezeigt. Ein Vergleich mit der Figur 3 ergibt, dass das zweite Rahmenteil 2b (vgl. Figur 3) durch das Verbindungs- bzw. Deckelteil 2b' gemäß Figur 5 ersetzt wurde. Ansonsten entspricht die Anordnung gemäß Figur 6 derjenigen aus Figur 3. Mit anderen Worten: Die Batteriezellen 3 werden in Figur 6 direkt wärmeleitend durch die Rahmenteile 2a und 2c bzw. die Verbindungsteile 2b', 2d kontaktiert.

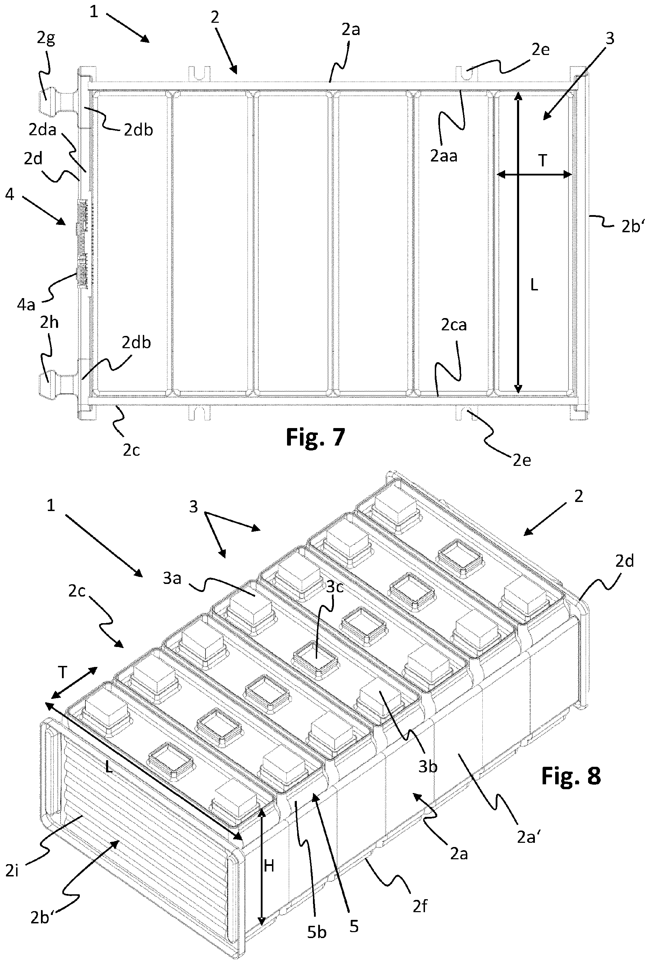

Figur 7 zeigt einen Längsschnitt durch eine der Figur 6 entsprechende Anordnung.

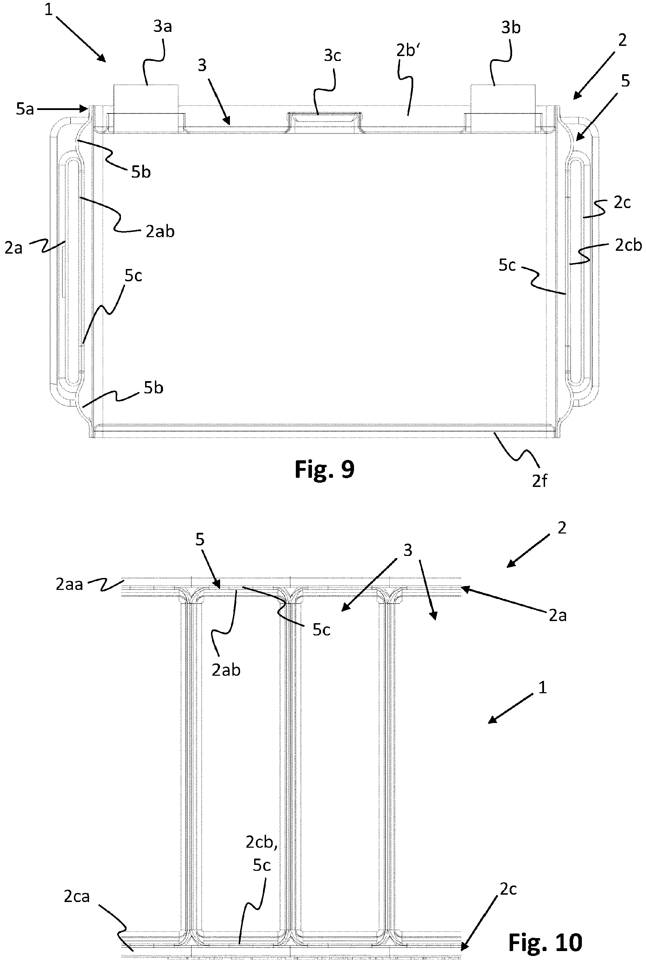

In Figur 8 ist in isometrischer Gesamtansicht eine Batteriezellen-Anordnung 1 gezeigt, die gemäß mit einer abweichenden Temperiervorrichtung 2 ausgerüstet ist, vgl. Figur 9. Letztere Figur zeigt eine Querschnittsansicht der Batteriezellen-Anordnung 1 aus Figur 8.

In Figur 8 und 9 ist bei Bezugszeichen 5 eine sogenannte Temperierhülse dargestellt, welche die gezeigte Batteriezelle 3 umfänglich umhüllt, wobei sie bei Bezugszeichen 5a (Figur 9) bevorzugt stoffschlüssig mit einem Gehäuse der Batteriezelle 3 verbunden ist. Auf diese Weise ist um die Batteriezelle 3 im Inneren der Temperierhülse 5 ein Strömungsraum geschaffen, der mit einem Temperierfluid füllbar oder von einem Temperierfluid durchströmbar ist. Zwischen zwei insbesondere im Querschnitt gut erkennbaren Wulsten 5b weist die Temperierhülse 5 auf beiden Seiten jeweils einen ebenen, glatten Abschnitt 5c (Figur 9) auf, an den sich das erste Rahmenteil 2a bzw. das dritte Rahmenteil 2c der Temperiervorrichtung 2 jeweils flächig anschmiegt, wie dargestellt. In dem genannten Anschmiegebereich weisen sowohl das erste Rahmenteil 2a und das dritte Rahmenteil 2c als auch Temperierhülse 5 korrespondierende, das heißt fluchtende Durchbrüche 2ab, 2cb bzw. 5d auf (Figur 9), um einen Austausch von Temperierfluid aus den Rahmenteilen 2a, 2c in die Temperierhülse 5 hinein und aus der Temperierhülse 5 heraus zu ermöglichen. Auf diese Weise ist der in der Temperierhülse 5 ausgebildete Strömungsraum für das Temperierfluid an dem Strömungsraum in den Rahmenteilen 2a, 2c und entsprechend auch in den Verbindungsteilen 2b', 2d fluidtechnisch angeschlossen. Zumindest die Rahmenteile 2a, 2c fungieren sowohl als Zuganker als auch als Verteilerohre.

Die vorstehend anhand von Figur 9 beschriebene Ausgestaltung ist nicht auf eine Verwendung bei der Batteriezellen-Anordnung 1 gemäß Figur 8 beschränkt, sondern kann grundsätzlich auch bei der Batteriezellen-Anordnung 1 gemäß den Figuren 1 bis 4 zum Einsatz kommen, wenn dort entsprechend Temperierhülsen für die Batteriezellen 3 vorgesehen sind.

Unter erneuter Bezugnahme auf die Figur 8 erkennt man bei Bezugszeichen 5b wiederum die angesprochenen Wulste der Temperierhülse 5, die eine Art Zentrierfunktion für die Rahmenteile 2a, 2c erfüllen, und bei Bezugszeichen 2b' das als Verbindungsteil ausgebildete zweite Rahmenteil, das eine Anzahl von als konvexe Wellungen ausgebildeten (innenliegenden) Strömungskanälen aufweist, welche den Strömungsraum des ersten Rahmenteils 2a mit dem Strömungsraum des dritten Rahmenteils 2c fluidtechnisch verbinden. Wie der Figur 9 insbesondere noch zu entnehmen ist, kann das erste Rahmenteil 2a und entsprechend auch das zweite Rahmenteil 2c (in Figur 8 nicht erkennbar) aus mehreren, insbesondere stoffschlüssig miteinander verbundenen Segmenten 2a' zusammengesetzt sein, wobei jedes Segment 2a' mit einer Batteriezelle 3 bzw. der entsprechenden Temperierhülse 5 korrespondiert.

Figur 10 zeigt ein Detail eines Längsschnitts durch die Ausgestaltung gemäß Figur 8 (vgl. auch Figur 9).

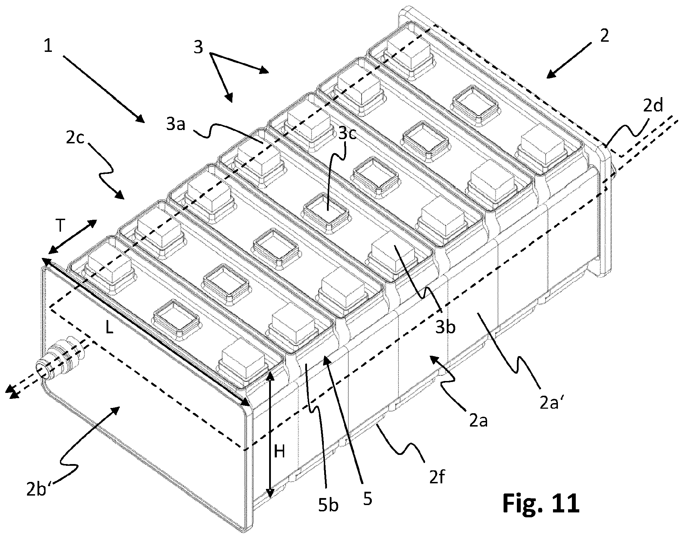

In Figur 11 ist eine Ausgestaltung gezeigt, die - bis auf die Ausgestaltung der Deckel- bzw. Verbindungsteile 2b', 2d - im Wesentlichen der Ausgestaltung in Figur 8 entspricht. Während jedoch gemäß Figur 8 Zuleitung und Ausleitung 2g, 2h (vgl. Figur 5) an ein und derselben Stirnseite der Batteriezellen-Anordnung 1, das heißt an dem Verbindungsteil 2d, angeordnet sind (in Figur 8 nicht erkennbar), befindet sich bei der Ausgestaltung gemäß Figur 11 der eine Anschluss (Zuleitung oder Ausleitung) 2g an dem Verbindungsteil 2d, während der andere Anschluss (Zuleitung bzw. Ausleitung) 2h im Bereich des anderen Verbindungsteils 2b' angeordnet ist. Entsprechend erfolgt die Strömung des Temperierfluids so, wie in Figur 11 mittels gestrichelter Pfeile symbolisch dargestellt.

Wie der Fachmann leicht erkennt, sind vielfältige Kombinationen von Merkmalen bei den exemplarisch beschriebenen Ausführungsbeispielen möglich. So kann beispielsweise das Verbindungsteil 2b' bei der Ausgestaltung gemäß Figur 11 entsprechend dem Verbindungsteil 2b' bei der Ausgestaltung gemäß Figur 8 ausgebildet sein. Auch bei der Ausgestaltung gemäß Figur 5 kommen für das gezeigte Verbindungsteil 2b' sowohl die Ausgestaltungen gemäß Figur 8 als auch gemäß Figur 11 in Betracht.

Befestigungsstrukturen 2e, beispielsweise gemäß Figur 5, können bei allen Ausgestaltungen vorgesehen sein, so auch bei der Ausgestaltung gemäß Figur 8 oder bei der Ausgestaltung gemäß Figur 11.

Keine der Ausgestaltungen ist auf die beispielhaft gezeigten durchgängigen oder segmentierten ersten bzw. dritten Rahmenteile 2a bzw. 2c beschränkt; auch hier ist ein Austausch möglich.

Die angesprochene Bodenplatte 2f kann bei der Ausgestaltung gemäß Figur 8 oder Figur 11 durchgängig oder ebenfalls segmentiert ausgebildet sein. Bei allen Ausgestaltungen ist es möglich, die Bodenplatte 2f fluidführend auszugestalten, worauf bereits hingewiesen wurde.

## Patentansprüche

1. Temperiervorrichtung (2) für eine Batteriezellen-Anordnung (1) aus mehreren, vorzugsweise identischen und nebeneinander angeordneten Batteriezellen (3), aufweisend:
ein erstes fluidleitendes Rahmenteil (2a) aus einem gut Wärme leitenden Material;
ein zweites fluidleitendes Rahmenteil (2b, 2b') aus einem gut Wärme leitenden Material;
ein drittes fluidleitendes Rahmenteil (2c) aus einem gut Wärme leitenden Material;
ein Verbindungsteil (2d);
bei der das erste Rahmenteil (2a), das zweite Rahmenteil (2b, 2b') und das dritte Rahmenteil (2c) zum Schaffen eines Strömungsraums fluidleitend miteinander verbunden sind und einen bevorzugt quaderförmigen Freiraum umgeben, in welchem Freiraum die Batteriezellen (3) anzuordnen sind und
welcher Freiraum durch das Verbindungsteil (2d) zumindest teilweise nach außen abgeschlossen ist.

2. Temperiervorrichtung (2) nach Anspruch 1, bei der das erste bis dritte Rahmenteil (2a-2c) als ein durchgängiges, vorzugsweise einstückiges Rahmenteil ausgebildet sind.

3. Temperiervorrichtung (2) nach Anspruch 2, bei der das durchgängige Rahmenteil (2a-2c) eine etwa C-förmige oder U-förmige Konfiguration aufweist.

4. Temperiervorrichtung (2) nach Anspruch 1, bei der das erste bis dritte Rahmenteil (2a-2c) als separate Rahmenteile ausgebildet sind und das zweite Rahmenteil (2b) an das erste Rahmenteil (2a) sowie an das dritte Rahmenteil (2c) angesetzt ist.

5. Temperiervorrichtung (2) nach einem der Ansprüche 1 bis 4, bei der zumindest das erste Rahmenteil (2a) und das dritte Rahmenteil (2c) und, bei Rückbezug auf Anspruch 2 oder 3, auch das zweite Rahmenteil (2b) als Rohrleitungsabschnitte mit rechteckigem oder ovalem Querschnitt ausgebildet sind.

6. Temperiervorrichtung (2) nach Anspruch 5, bei der der Querschnitt in einer ersten Raumrichtung eine geringere, lichte Abmessung aufweist als in einer zweiten Raumrichtung senkrecht zu der ersten Raumrichtung, welche erste Raumrichtung vorzugsweise den quaderförmigen Freiraum durchsetzt, vorzugsweise senkrecht zu einer gedachten Seitenfläche des quaderförmigen Freiraums, während die zweite Raumrichtung vorzugsweise parallel zu der gedachten Seitenfläche des quaderförmigen Freiraums orientiert ist.

7. Temperiervorrichtung (2) nach einem der Ansprüche 1 bis 6, bei der das Verbindungsteil (2d) als fluidleitendes Verbindungsteil ausgebildet ist und mit den ersten bis dritten Rahmenteilen (2a-2c) in fluidleitender Verbindung steht.

8. Temperiervorrichtung (2) nach einem der Ansprüche 1 bis 7, bei der das Verbindungsteil (2d) und, bei Rückbezug auf Anspruch 4, vorzugsweise auch das zweite Rahmenteil (2b'), eine Zuleitung und/oder eine Ableitung (2g, 2h) für ein Temperierfluid aufweist.

9. Temperiervorrichtung (2) nach Anspruch 8 mit einem Temperierfluid, vorzugsweise Wasser oder ein Dielektrikum.

10. Temperiervorrichtung (2) nach einem der Ansprüche 1 bis 9, bei der in dem Freiraum eine Anzahl von Hülsenelementen (5) zur gekapselten Aufnahme von jeweils einer Batteriezelle (3) vorgesehen sind.

11. Temperiervorrichtung (2) nach Anspruch 10, bei der jedes der Hülsenelemente (5) über wenigstens einen Durchbruch (5c) in seiner Mantelfläche fluidleitend mit einem der Rahmenteile (2a, 2c) verbunden ist, welche Rahmenteile (2a, 2c) entsprechende Durchbrüche (2ab, 2cb) aufweisen, vorzugsweise an ihrer dem Freiraum zugewandten Innenseite.

12. Temperiervorrichtung (2) nach einem der Ansprüche 1 bis 9, bei der die Rahmenteile (2a-2c) und/oder das Verbindungsteil (2d) an einer dem Freiraum zugewandten Innenseite für einen direkten Wärme leitenden Kontakt mit in dem Freiraum anzuordnenden Batteriezellen (3) ausgebildet sind, vorzugsweise unter Zwischenschaltung eines Wärmeleitmittels.

13. Temperiervorrichtung (2) nach Anspruch 10 mit einem zusätzlichen Rahmenteil (2f), welches zusätzliche Rahmenteil (2f) den Freiraum auf einer anderen Seite umgibt als die ersten bis dritten Rahmenteile (2a-2c) und das Verbindungsteil (2d).

14. Temperiervorrichtung (2) nach einem der Ansprüche 1 bis 13, bei der an einem der Rahmenteile (2a-2c) und/oder an dem Verbindungsteil (2d), vorzugsweise nur an dem Verbindungsteil (2d), eine Aufnahme für eine Elektronikplatine (4) in Wärme leitender Verbindung mit dem Strömungsraum angeordnet ist.

15. Batteriezellen-Anordnung (1) mit mehreren, vorzugsweise identischen und nebeneinander angeordneten Batteriezellen (3) und mit einer Temperiervorrichtung (2) nach einem der vorstehenden Ansprüche, bei der die Batteriezellen (3) in dem Freiraum angeordnet und mittels der Rahmenteile (2a-2c) und des Verbindungsteils (2d) kraftschlüssig aneinander befestigt sind.

16. Batteriezellen-Anordnung (1) nach Anspruch 15, bei der die Batteriezellen (3) die Rahmenteile (2a-2c) und/oder das Verbindungsteil (2d) direkt Wärme leitend kontaktieren, vorzugsweise unter Zwischenschaltung eines Wärmeleitmittels.

17. Batteriezellen-Anordnung (1) nach Anspruch 15, bei der die einzelnen Batteriezellen (3) jeweils in einem Hülsenelement (5) zur gekapselten Aufnahme von jeweils einer Batteriezelle (2) angeordnet sind und bei der gemäß Anspruch 11 jedes der Hülsenelemente (5) über wenigstens einen Durchbruch (5c) in seiner Mantelfläche fluidleitend mit einem der Rahmenteile (2a, 2c) verbunden ist, welche Rahmenteile (2a, 2c) entsprechende Durchbrüche (2ab, 2cb) aufweisen, vorzugsweise an ihrer dem Freiraum zugewandten Innenseite.

18. Verfahren zum Schaffen einer temperierten Batteriezellen-Anordnung (1), beinhaltend:
- Anordnen einer Anzahl von gleichartigen Batteriezellen (3) Seite an Seite nebeneinander;
- Umgeben der Batteriezellen (3) mit einer Temperiervorrichtung (2) nach einem der Ansprüche 1 bis 14, sodass die Batteriezellen (3) durch die Rahmenteile (2a-2c) und das Verbindungsteil (2d) kraftschlüssig aneinander gehalten werden;
- Durchströmen des Strömungsraums mit einem Temperierfluid.
